# EUROPÄISCHE PATENTSCHRIFT

(11) **EP 1 294 529 B1**
(45) Veröffentlichungstag und Bekanntmachung des Hinweises auf die Patenterteilung: **25.05.2005**
(21) Anmeldenummer: 01967096.7
(22) Anmeldetag: 27.06.2001
(51) Int. Cl.: B23K 37/053, B23K 37/00, F16L 13/02

(54) **VERFAHREN UND ANORDNUNG ZUR BEGRENZUNG DER TEMPERATUR BEIM SCHWEISSEN DER ENDEN EINES ROHRPAARES IM SCHWEISSNAHTNAHEN BEREICH DES ROHRWERKSTOFFES MITTELS GAS**
METHOD AND DEVICE FOR LIMITING TEMPERATURE USING GAS, WHEN WELDING THE ENDS OF TWO TUBES, IN THE REGION OF THE TUBE MATERIAL CLOSE TO THE WELD SEAM
PROCEDE ET DISPOSITIF DE LIMITATION, A L'AIDE DE GAZ, DE LA TEMPERATURE DE LA MATIERE CONSTITUANT DES TUYAUX DANS LA ZONE PROCHE DE LA SOUDURE LORS DU SOUDAGE DES EXTREMITES DE DEUX TUYAUX

(30) Priorität: 27.06.2000 DE 10030315
(43) Veröffentlichungstag der Anmeldung: 26.03.2003
(73) Patentinhaber: WESTFALEN AG, D-48155 Münster (DE)
(72) Erfinder: WESTFALEN AG, D-48155 Münster (DE)
(74) Vertreter: Weiss, Peter, Dr. rer.nat.
(86) Internationale Anmeldenummer: PCT/EP2001/007316
(87) Internationale Veröffentlichungsnummer: WO 2002/000385

(56) Entgegenhaltungen:
- EP-A- 0 215 868
- WO-A-86/05430
- WO-A-95/23669
- DE-A- 4 017 886
- DE-A- 19 700 289
- DE-C- 19 713 300
- DE-U- 9 005 893
- US-A- 3 784 778
- PATENT ABSTRACTS OF JAPAN vol. 1998, no. 14, 31. Dezember 1998 (1998-12-31) & JP 10 249547 A (SUMITOMO METAL IND LTD), 22. September 1998 (1998-09-22)

## Beschreibung

Die Erfindung betrifft ein Verfahren zur Begrenzung der Temperatur beim Schweißen der Enden eines Rohrpaares im schweißnahtnahen Bereich des Rohrwerkstoffes nach dem Oberbegriff des Anspruchs 1 und eine Anordnung zum Durchführen des Verfahrens nach dem Oberbegriff des Nebenanspruchs 6.

### STAND DER TECHNIK

Korrosionsbeständige Stähle mit voll austenitischem Gefügeaufbau, die beispielsweise im Bereich der Nahrungsmittel- und Getränkeindustrie, der Chemie oder Pharmazie in Form von Rohren zur Anwendung kommen und dabei miteinander verschweißt werden müssen, erfahren vielfach im schweißnahtnahen Bereich des Rohrwerkstoffes eine unzulässig hohe Erwärmung, die eine Gefügeveränderung in diesem Bereich hervorruft und dadurch die Rohre im Bereich der Schweißnaht korrosionsanfällig macht. Eine hohe Wärmebelastung im Bereich der Rundschweißnaht muß daher aus dem vorgenannten Grunde vermieden werden.

Es ist eine Vielzahl von Anwendungsfällen bekannt, bei denen eine Rohrleitung sowohl einem hohen innendruck des zu fördernden Fluides als auch einer Korrosionsbeanspruchung durch dieses Fluid ausgesetzt ist. Als Beispiel hierfür sei die Erdgasförderung mittels einer Pipeline genannt, in der das zu fördernde Erdgas in der bei der Förderung anfallenden Beschaffenheit und des dabei anstehenden Druckes ohne anschließende Trocknung gefördert wird. Dieses nasse und unter hohem Druck stehende Erdgas ist aufgrund seiner Zusammensetzung korrosiv. Es ist daher eine Rohrleitung erforderlich, die einerseits zumindest auf der Rohrinnenseite die notwendige Korrosionsbeständigkeit aufweist und die andererseits dem hohen Förderdruck standhalten muß.

Eine erste Lösung dieses Problems besteht in naheliegender Weise darin, das Rohr aus Festigkeitsgründen dickwandig auszuführen, wobei der verwendete Werkstoff insgesamt die notwendige Korrosionsbeständigkeit besitzen muß. Eine derartige Lösung scheidet in den meisten Fällen aber aus Kostengründen aus.

Gleichwohl ist bei der Rundnahtschweißung dieser in der Regel aus einzelnen Rohrstücken bestehenden Rohrleitung darauf zu achten, daß beim Schweißen des dickwandigen Rohres, das zwangsläufig in mehreren Lagen und damit unter hoher thermischer Belastung durchzuführen ist, nicht unzulässig hohe Temperaturen im schweißnahtnahen Bereich des Rohrwerkstoffes auftreten, damit die vorgenannten Korrosionsprobleme in diesem Bereich ebenfalls vermieden werden.

Eine weitere diesbezügliche Lösung, Festigkeitsanforderungen und Korrosionsschutz gleichermaßen miteinander zu verbinden, besteht darin, die in Frage kommende Rohrleitung aus Rohrleitungsstücken, die jeweils aus plattiertem Rohr bestehen, zusammenzusetzen. Dabei übernimmt die ― im allgemeinen ― unlegierte Außenschale die Beherrschung des Innendruckes und die hochlegierte Innenschale den Korrosionsschutz. Bei der herkömmlichen Herstellung plattierter Rohre geht man hierbei von walzplattierten Blechen aus, wobei die beiden Metallschichten durch eine Diffusionsbrücke fest metallurgisch miteinander verzahnt sind.

Eine dritte diesbezügliche Lösung sieht in diesem Zusammenhang schließlich vor, Festigkeit, Korrosionsbeständigkeit und Wirtschaftlichkeit dadurch miteinander in Einklang zu bringen, daß das in Frage kommende Rohr als sogenanntes Bimetall-Rohr ausgebildet wird. Der Aufbau und die Eigenschaften eines derartigen Rohres sind in der Firmendruckschrift Butting-Bimetall-Rohre beschrieben (BUTTING Edelstahlrohre, Wittingen-Knesebeck). Bei diesem sogenannten BUBI-Rohr wird ein korrosionsbeständiges Rohr in ein ferritisches Rohr eingezogen und mit Hilfe einer Expansions- und Kalibrierpresse eingepreßt. Dabei wird das Innenrohr zunächst elastisch, dann plastisch zwischen rund 2 und 5% aufgeweitet, bis es an der Innenwand des Außenrohres anliegt. Anschließend findet noch eine gemeinsame Aufweitung des Innen- und Außenrohres um rund 0,5 bis 1 % statt, wobei das Außenrohr von einem zweigeteilten Außenwerkzeug gehalten wird.

Beim Rundnahtschweißen dieser letztgenannten Rohre, aber auch bei den vorgenannten weiteren Rohrarten und Rohrwerkstoffen, sind die Vorschriften zur Nahtvorbereitung und zum Lagenaufbau zur Vermeidung von wurzelseitigen Aufmischungen strengstens zu beachten. Dies bedeutet beispielsweise im Hinblick auf die Temperatur beim Schweißen der Enden des Rohrpaares im schweißnahtnahen Bereich des Rohrwerkstoffes, daß diese Temperatur eine bestimmte zulässige Grenztemperatur nicht überschreiten darf, da es ansonsten zu den vorstehend erwähnten, die Korrosionsbeständigkeit negativ beeinflussenden Gefügeänderungen kommt.

Zur Vermeidung kritischer thermischer Beanspruchungen ist es bislang Praxis, daß im Verlauf des mehrlagigen Schweißens der Rundnaht Schweißpausen eingelegt werden, damit sich die Schweißnaht und damit der schweißnahtnahe Bereich des Rohrwerkstoffes abkühlen können und dort eine Temperaturerhöhung über eine kritische Grenztemperatur vermieden wird, die einträte, wenn mehrlagig ohne zeitliche Unterbrechung geschweißt würde.

Eine derartige Vorgehensweise beim Schweißen führt zwangsläufig dazu, daß die Zeit zur Herstellung einer vollständigen mehrlagigen Rundnaht um die Zeitdauer der insgesamt einzulegenden Schweißpausen verlängert wird. Es liegt auf der Hand, daß eine derartige Vorgehensweise zwangsläufig zu relativ hohen Kosten bezogen auf eine Rohrverbindung führt, da sich neben dem größeren zeitlichen Aufwand zur Herstellung der eigentlichen Rundnaht auch der weitere Aufwand für die Herstellung beispielsweise einer aus einer Vielzahl von Rohrleitungsstücken bestehenden Rohrleitung, wie Zeitdauer der Bereitstellung von Einrichtungen zur Rohrverlegung und Qualitätssicherung, entsprechend erhöht.

Aber auch das Schweißen dickwandiger Rohre aus normalen Stählen ist nicht unproblematisch, wenn diese Rohre zügig mehrtagig geschweißt werden sollen. Dabei wirkt die hohe Wärmebelastung zwangsläufig auch auf den druckmittelbeaufschlagten Antrieb einer sogenannten Innenspannvorrichtung, die die miteinander zu verbindenden Rohrleitungsenden jeweils an der Innenseite der Rohrleitungsenden gegenseitig konzentrisch ausrichtet und spannt Die mit dem Wärmeanfall verbundene Erwärmung des Antriebszylinders, insbesondere seiner Antriebskolben und der in diesen angeordneten Dichtungen, verhindert bislang, daß dieser in wünschenswerter Weise mit hydraulischem Druckmittel beaufschlagt werden kann. Ein hydraulischer Betrieb des Antriebszylinders wäre jedoch wegen der gegenüber pneumatischem Druckmittel vielfach höheren Betriebsdrücke und der damit verbundenen entsprechend höheren Spannkräfte wünschenswert, da es die hohen Spannkräfte in Grenzen erlauben, dickwandige Rohre, die an sich in der Regel auch immer leicht oval sind, wenn es sich nicht gerade um teure kalibrierte Rohre handelt, im Zuge des Spannens und Ausrichtens rund zu drücken. Auf diese Möglichkeit muß allerdings bislang verzichtet werden, da die zur Anwendung kommenden Dichtungen in den Kolben des Antriebszylinders unter dem Einfluß hoher Temperaturen und Drücke undicht werden und darüber hinaus das hydraulische Druckmittel infolge der hohen Wärmebelastung zu sieden beginnt und dadurch ein ordnungsgemäßer Betrieb des Antriebs nicht mehr sichergestellt ist Anstelle der wünschenswerten hydraulischen Antriebe für die innenspannvorrichtung werden daher bislang pneumatisch betriebene verwendet, bei denen die Spannkräfte allerdings relativ gering bleiben müssen, so daß ein Runddrücken ovaler dickwandiger Rohre nicht möglich ist

**Die WO 86 05430 A** beschreibt eine Vorrichtung zum gegenseitigen Zentrieren und Spannen von zwei miteinander zu verschweißenden Rohrkörpem. die zusammen mit den Rohrleitungsenden eine ringförmige Formiergaskammer zur Beaufschlagung der Schweißnaht mit einem Formiergas bildet und begrenzt. Die Vorrichtung weist für jeden der Rohrkörper beiderseits der mit Schutzgaszuführung versehenen Formiergaskammer eine Spanneinheit auf, die wenigstens eine Umfangsreihe von in einer Spann-Nut enthaltenen Spanngliedern umfasst, die durch gegenseitige axiale Näherung bzw. Entfernung der Flanken der Spann-Nut nach außen spannbar bzw. nach innen entspannbar sind und eine nach außen weisende Spannfläche für den Kontakt mit der Bohrungsfläche des Rohrkörpers sowie in Umfangsrichtung voneinander Abstand aufweisen, wobei die axiale Ausdehnung der in großer Zahl mit geringem Abstand voneinander aufgereihten Spannglieder größer ist als die Breite ihrer Spannflächen in Umfangsrichtung.

Das zugeführte Formiergas soll dabei eine Oxydation der Schweißnaht verhindern und damit die Schweißung einer bindefehlerfreien und korrosionsbeständigen Schweißnaht und ihrer angrenzenden Bereiche ermöglichen. Das beiderseits über Spannglieder abströmende Formiergas reduziert dabei auch den Wärmeeinfall auf die Innenspannvorrichtung, wobei diese Kühlung einerseits auf die Spannglieder und andererseits auf die Rohrinnenfläche, von der wesentliche thermische Wirkungen auf diese Spannglieder ausgehen, gerichtet ist. Um die Spannglieder vor Überhitzung zu schützen, sind darüber hinaus deren Kontaktflächen mit der Rohrinnenfläche punktförmig ausgebildet.

Aus der **WO 95 23669 A** ist ein Verfahren zum Schweißen, insbesondere Verbindungsschweißen von metallischen Werkstoffen und eine Vorrichtungen zum Durchführen des Verfahrens bekannt, mit dem bzw. mit der bei geringem Aufwand im Bereich der Schweißstelle während des Schweißens ein hoher Temperaturgradient über die Wanddicke der Werkstücke erzielt werden kann. Zur Erzeugung dieses Temperaturgradienten werden die Werkstücke während des Schweißens mit Flüssiggas gekühlt.

Die Vorrichtung weist eine in das Innere der zu verbindenden Rohre (Werkstücke) einführbare Sprüheinrichtung auf, die mit einer Zuleitung für Flüssiggas verbunden und mit wenigstens einer Austrittsöffnung versehen ist. Der zu kühlende Bereich der Schweißnaht wird im wesentlichen durch zwei scheibenförmige Leitbleche berandet, die den zu kühlenden Bereich sehr eng auf den Wurzelbereich der Schweißnaht begrenzen.

Der schweißnahtnahe Bereich, der sich beiderseits in die beiden zu verschweißenden Rohrenden hinein erstreckt, wird dadurch keiner planmäßigen Kühlung unterzogen. Das bekannte Verfahren strebt offensichtlich eine intensive Kühlung mittels Flüssiggas im wesentlichen über die Wanddicke d und damit in radialer Richtung an. Es hat sich in diesem Zusammenhang gezeigt, daß die direkte Aufbringung von kryogener Flüssigkeit auf die Schweißnaht und deren angrenzende Bereiche zu einer nachteiligen Aufhärtung des metallischen Rohrwerkstoffes führt.

Da beim bekannten Verfahren Flüssiggas auf den Wurzelbereich der Schweißnaht aufgebracht wird, kann eine diesbezügliche Kühlung sinnvollerweise erst nach Schließen der Schweißfuge im Wurzelbereich durchgeführt werden. Daraus folgt zwingend, daß das bekannte Verfahren allenfalls für dickwandige Rohre geeignet ist, da nur bei diesen eine mehrlagige Schweißung (Wurzellage + Decklage(n)) möglich ist.

Es ist Aufgabe der vorliegenden Erfindung, die Temperatur beim Schweißen der Enden eines Rohrpaares im schweißnahtnahen Bereich des Rohrwerkstoffes zu kontrollieren und zu begrenzen und somit die nachteilige Wirkung des beim Schweißen auftretenden Wärmeanfalls auf Rohrwerkstoff und apparative Umgebung nicht eintreten zu lassen.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des vorgeschlagenen Verfahrens sind Gegenstand der Unteransprüche. Eine Anordnung zum Durchführen des Verfahrens gemäß der Erfindung ist durch die Merkmale des Nebenanspruchs 6 gekennzeichnet. Vorteilhafte Ausführungsformen der vorgeschlagenen Anordnung sind Gegenstand der nachgeordneten Unteransprüche.

Die verfahrenstechnische Lösung besteht darin, daß das beim Schweißen derartiger Rundnähte erforderliche Formiergas, das die Oxydation der Schweißnaht verhindert und von der Innenseite des Rohres an die Schweißnaht in deren Wurzelbereich herangeführt wird, gleichzeitig genutzt wird zur Kühlung des schweißnahtnahen Bereichs des Rohrwerkstoffes im Bereich einer vom Schweißen bestimmten Wärmeeinflußzone, so daß sich im Rohrwerkstoff der Wärmeeinflußzone eine Temperatur innerhalb eines von einer oberen und einer unteren Grenztemperatur vorgegebenen Temperaturbereichs einstellt. Hierzu ist allerdings das üblicherweise bei Raumtemperatur bereitgestellte Formiergas nicht geeignet, da seine Energieaufnahmefähigkeit, d.h. seine mögliche Enthalpieänderung, von seiner Bereitstellungstemperatur (Raum- oder Umgebungstemperatur) bis zu einer oberen Temperatur, die wegen des notwendigen Wärmeüberganges unterhalb der einzuhaltenden oberen Grenztemperatur im vorgegebenen Temperaturbereich liegen muß, begrenzt und damit im allgemeinen viel zu klein ist, um eine hinreichende Kühlwirkung und damit hinreichende Wärmeabfuhr aus dem schweißnahtnahen Bereich des Rohrwerkstoffes zu ermöglichen.

Die Lösung liegt nun zum einen darin, daß das Formiergas, beispielsweise Stickstoff oder Argon, als tiefkaltes verflüssigtes Gas bereitgestellt wird. Damit ist die gesamte Enthalpie des Gases von seiner Siedetemperatur bei dem entsprechenden Bereitstellungsdruck in der Flüssigphase bis zu einer oberen Temperatur in der Gasphase, die aufgrund des notwendigen Wärmeüberganges wenigstens etwas unterhalb der einzuhaltenden Temperatur liegt, ausnutzbar.

Um das vorgeschlagene Verfahren sehr variabel an die unterschiedlichsten thermischen Belastungen anpassen zu können, werden zwei Verfahrensvarianten vorgeschlagen. Die erste Variante besteht darin, das tiefkalte verflüssigte Gas aus einem sogenannten Vorratsbehälter und Kaltverdampfer für kryogene Flüssigkeit zu entnehmen und in einem externen Verdampfer zu verdampfen. Der so erzeugte Sattdampf verläßt etwa mit Siedetemperatur, die beispielsweise für einen Umgebungsdruck von ca. 1 bar für Stickstoff bei etwa 77 K (Kelvin) und für Argon bei ca. 87 K liegt, den Verdampfer und wird mit etwa dieser Temperatur auch in die vorgeschlagene Anordnung eingeleitet.

Falls die thermische Belastung beim Schweißen derart ansteigt, daß eine hinreichende Kühlung mit dem tiefkalten Formiergas-Dampf, der im günstigsten Fall Sattdampftemperatur hat, nicht mehr sichergestellt ist, dann sieht eine zweite Verfahrensvariante vor, unter Umgehung des Verdampfers das dem Vorratsbehälter und Kaltverdampfer unmittelbar entnommene tiefkalte verflüssigte Gas direkt der erfindungsgemäßen Anordnung zuzuführen. Auf diese Weise ist es möglich, die Verdampfungswärme des tiefkalten verflüssigten Gases zu nutzen und so eine noch intensivere Kühlung der Anordnung und letztlich des in Frage kommenden schweißnahtnahen Bereichs des Rohrwerkstoffes zu erreichen. Auf dem Weg in den schweißnahtnahen Bereich wird das tiefkalte verflüssigte Gas zwar verdampfen, jedoch steht dann dort ein Formiergas zur Verfügung, das in jedem Falle eine tiefere Temperatur besitzt, als dies bei einer Beschickung der erfindungsgemäßen Anordnung mit Formiergas in gasförmiger Phase der Fall ist. Dies resultiert aus der Tatsache, daß die über den Verdampfer geleitete kryogene Flüssigkeit dort bereits ihre Verdampfungsenthalpie bereitstellt, ohne daß diese zur Kühlung der Schweißnaht bzw. der schweißnahtnahen aufgeheizten Bereiche der erfindungsgemäßen Anordnung genutzt werden konnte.

Das erfindungsgemäße Verfahren ist derart ausgestaltet, daß die Temperatur im schweißnahtnahen Bereich des Rohrwerkstoffes laufend gemessen und einer Steuerung übermittelt wird. Gleichzeitig hierzu wird auch der Vordruck des Gasstromes in der Gasleitung gemessen. Bei Unterschreitung eines unteren Grenzdruckes wird die Kühlung auf Flüssiggaszufuhr umgeschaltet. Alternativ hierzu ist auch eine Durchflußmessung in der Gasleitung vorgesehen. Auf diese Weise ist es der Steuerung möglich, festzustellen, ob über eine Intensivierung der Gaszuführung eine Intensivierung der Kühlung möglich ist oder ob die Anordnung zur Erhöhung ihrer Kühlleistung auf Flüssiggaszufuhr umzuschalten ist.

Darüber hinaus werden die der Steuerung übermittelten Informationen über Gasvordruck bzw. Gasdurchfluß in der Gasleitung einerseits und Temperatur im schweißnahtnahen Bereich des Rohrpaares andererseits auch an eine Brennersteuerung weitergeleitet, damit sichergestellt ist, daß eine Schweißung nur begonnen und durchgeführt werden kann, wenn ein Gasdurchfluß durch die Gasleitung gegeben ist, der die Bereitstellung von Formiergas und die notwendige Kühlleistung sicherstellt.

Die miteinander zu verschweißenden Rohrenden werden innenseits vorzugsweise mit der sogenannten Innenspannvorrichtung gespannt und koaxial zueinander ausgerichtet. Ein auf der Außenseite der Rohrleitungen positioniertes Schweißwerkzeug und die Rohrleitungen führen eine auf die Achse der Rohrleitungen bezogene Rotationsbewegung relativ zueinander aus. In der Innenspannvorrichtung sind zwei sogenannte Spannerköpfe vorgesehen, deren Spannbacken beiderseits der Schweißnaht kreisförmig angeordnet sind und die zwischen sich einen Ringraum bilden, der rohrseitig vom Wurzelbereich der Schweißnaht (Wärmeeinflußzone) berandet ist. Eine derartige Innenspannvorrichtung ist beispielsweise in dem Gebrauchsmuster **DE-U-90 05 893** oder auch in der **EP-B-0 215 868** beschrieben. Der vorgenannte ringförmige Raum zwischen den Spannbacken innerhalb der umlaufenden Schweißnaht wird in an sich bekannter Weise im Zuge der Herstellung der Rundnaht mit dem notwendigen Formiergas beaufschlagt, das in der Regel im Bereich der Längsachse (Rohrachse) der Innenspannvorrichtung letzterer zugeführt wird und zu beiden Seiten der Rundnaht, jeweils über Abströmöffnungen der gasdurchlässig ausgebildeten Spannbacken, abströmen kann.

Das vorgeschlagene Verfahren führt nun diesem vorstehend beschriebenen Ringraum zwischen den Spannerköpfen, einer Kühl- und Formiergaskammer, das tiefkalte Formiergas zu, weiches hier dann die vom Schweißen bestimmte, beiderseits der Schweißnaht in den Rohrleitungsenden sich ausbreitende Wärmeeinflußzone intensiv kühlen kann. Die Kühl- und Formiergaskammer wird außenseits begrenzt von der Wärmeeinflußzone und innenseits begrenzt von einer im wesentlichen zylindrischen Verlängerung, die einerseits an einem den zweiten Spannerkopf spreizenden Innenteil angeordnet ist und andererseits bis zum ersten Spannerkopf heranreicht und diesen axial abstützt. Dabei erstreckt sich die Kühl- und Formiergaskammer jeweils beiderseits der Schweißnaht in Richtung der Achsen der Rohrleitung über das zum jeweiligen Spannen der Rohrleitungsenden notwendige Abstandsmaß hinaus. Weiterhin münden in die Kühl- und Formiergaskammer Verteilungsbohrungen für Formiergas aus, die in der Verlängerung angeordnet sind, und es sind jeweils im Bereich zwischen dem Spannerkopf und der zugeordneten Rohrleitung Abströmöffnungen vorgesehen. Die derart erweiterte Kühl- und Formiergaskammer kann dadurch eine relativ große Gasmenge aufnehmen, wodurch einerseits die Kühlleistung erhöht und andererseits dieser erweiterte Ringraum dann nicht mehr ein die Gaszufuhr limitierendes Element darstellt.

Eine hinreichende Kühlung der Wärmeeinflußzone wird durch eine gute und störungsfreie Zufuhr des kühlenden Formiergases sichergestellt. Hierzu sieht eine weitere Ausführungsform der vorgeschlagenen Anordnung vor, daß die Verlängerung eine in Richtung der Achse der Rohrleitung orientierte, die Achse umschließende Verteilungskammer aufweist, von der Verteilungsbohrungen ausgehen, die sternförmig über den gesamten Umfang der Kühl- und Formiergaskammer verteilt angeordnet sind und in letztere ausmünden.

Die Verteilung wird einerseits weiter verbessert und andererseits wird die von der Wärmeeinflußzone ausgehende Wärmestrahlung sehr wirksam in das Formiergas eingebracht, wenn letzteres vor dem Austritt in die Kühl- und Formiergaskammer eine feinporig strukturierte Verteilungshülse durchströmt, die, wie dies ein weiterer Vorschlag vorsieht, die Verlängerung im Bereich der austretenden Verteilungsbohrungen umschließt.

Gemäß einem weiteren Vorschlag ist vorgesehen, daß das Formiergas der Verteilungskammer über eine Formiergasbohrung, die in einer einen Antriebszylinder der Innenspannvorrichtung und die Verteilungskammer durchdringenden ersten Antriebsstange angeordnet ist, zugeführt wird. Dadurch wird der Antriebszylinder mit seinen Antriebskolben von innen her gekühlt, so daß dem aus dem Bereich der Schweißnaht von außen auf den Antriebszylinder einwirkende Wärmeanfall zur Vermeidung unzulässiger Temperaturerhöhungen wirksam entgegengewirkt werden kann. Dieser von innen quasi gekühlte Antriebszylinder kann dann in vorteilhafter Weise auch mit hydraulischem Druckmittel beaufschlagt werden. Zu diesem Zweck sieht ein weiterer Vorschlag vor, daß die Antriebskolben im Antriebszylinder jeweils mit einer mit hydraulischem Druckmittel beaufschlagbaren Profildichtung ausgestattet sind.

Um die Kühlung der Wärmeeinflußzone wirksam und hinreichend regeln zu können, sieht ein weiterer Vorschlag vor, daß im Bereich der Wärmeeinflußzone eine die Temperatur der Außen- oder Innenwand des Rohrleitungsendes erfassende Temperaturmeßstelle vorgesehen ist. Unter den gegebenen Betriebsbedingungen ist es von Vorteil, diese Temperaturmeßstelle berührungsfrei arbeitend zu realisieren.

Bei hohem Wärmeanfall im Verlauf zügigen mehrlagigen Schweißens ist in der Regel eine besonders intensive Kühlung notwendig. Diese wird durch die vorstehend erwähnte Verdampfungskühlung erreicht. Dabei ist nicht auszuschließen, daß schweißnahtfemere Bereiche der Innenspannvorrichtung soweit abgekühlt werden, daß sie im Bereich ihrer Kontaktflächen mit dem zugeordneten Rohrleitungsende und im Bereich ihrer gegenseitigen Laufflächen festfrieren. Um dies wirksam zu vermeiden ist weiterhin vorgesehen, daß diese Bereiche eine Chrom-Polytetraflouräthylen-Beschichtung (Chrom-Teflon) aufweisen.

Durch die Veränderung der Entnahmebedingungen und durch den in Grenzen veränderbaren Wärmeeinfall an einem Vorratsbehälter und Kaltverdampfer für kryogene Flüssigkeit kann die Eintrittstemperatur des tiefkalten Formiergases in die Innenspannvorrichtung in Grenzen verändert werden, so daß die Temperatur im kritischen schweißnahtnahen Bereich des Rohrwerkstoffes unterhalb eines vorgegebenen oberen Temperaturgrenzwertes zu halten ist. Die Kühlung ist dabei derart zu steuern, daß ein unterer Temperaturgrenzwert gleichfalls nicht unterschritten wird, da ein derartiges Unterschreiten die Qualität der Rundnaht und damit der Rohrverbindung ebenfalls nachteilig beeinflussen würde. So ist beispielsweise bei der Schweißung der vorgenannten BUBI-Rohre dafür Sorge zu tragen, daß die in Frage kommende Temperatur im schweißnahtnahen Bereich des Rohrwerkstoffes im Temperaturbereich von ca. 40 °C bis 100 °C gehalten wird. Zu diesem Zweck ist im einzelnen vorgesehen, daß die Formiergasbohrung wahlweise mit einer Gasleitung oder mit einer Leitung für Flüssiggas verbunden ist, die beide in dem Vorratsbehälter und Kaltverdampfer für kryogene Flüssigkeit enden. Dabei wird die Verbindung zwischen dem Vorratsbehälter und Kaltverdampfer und der Gasleitung oder der Leitung für Flüssiggas, wie dies weiterhin vorgesehen ist, abhängig von der Temperatur an der Temperaturmeßstelle über eine Einrichtung zur Temperaturmessung gesteuert.

### KURZBESCHREIBUNG DER ZEICHNUNGEN

Ein Ausführungsbeispiel einer Anordnung zur Durchführung des erfindungsgemäßen Verfahrens in zwei vorteilhaften Varianten ist in der Zeichnung dargestellt und wird nachfolgend beschrieben. Es zeigen
- Figur 1: einen Mittelschnitt durch einen wesentlichen Teil einer Anordnung gemäß der Erfindung im Bereich beiderseits einer Rundschweißnaht;
- Figur 2: eine schematische Darstellung der erfindungsgemäßen Anordnung in Verbindung mit einem an sich bekannten Vorratsbehälter und Kaltverdampfer für kryogene Flüssigkeit und
- **Figur 3**: eine in Figur 2 im Bereich der Rundschweißnaht mit "X" gekennzeichnete Einzelheit in vergrößerter Darstellung.

### BEZUGSZEICHENLISTE DER VERWENDETEN ABKÜRZUNGEN

Fiauren 1 und 2
- 1: erstes Rohrleitungsende
- 2: zweites Rohrleitungsende
- 3: Innenspannvorrichtung
- 3*: erster Spannerkopf
- 3a*: erster Innenteil
- 3aa*: erster Außenteil
- 3**: zweiter Spannerkopf
- 3a**: zweiter Innenteil
- 3ab**: Verlängerung
- 3aa**: zweiter Außenteil
- 3c: erste Antriebsstange
- 3c*: erster Antriebskolben
- 3d: zweite Antriebsstange
- 3d*: zweiter Antriebskolben
- 3e: erste Druckmittelbohrung
- 3f: zweite Druckmittelbohrung
- 3g: Formiergasbohrung
- 3g*: Querbohrung
- 3h: Schaft
- 3i: Versorgungsrohr
- 3k: Kupplungsvorrichtung
- 3l: Verteilungskammer
- 3m: Verteilungsbohrung
- 3n: feinporig strukturierte Verteilungshülse (Sintermetall)
- 3o*: erste Abströmöffnungen
- 3o**: zweite Abströmöffnungen

- 4: Schweißwerkzeug
- 5: Gasleitung
- 6: Leitung für Flüssiggas
- 7: Sammlerteil
- 8.1: erste Steuereinheit (Gaszufuhr)
- 8.2: zweite Steuereinheit (Schweißwerkzeug)
- 9: erstes ferngesteuertes Absperrventil
- 10: zweites femgesteuertes Absperrventil
- 11: erstes Handabsperrventil
- 12: zweites Handabsperrventil
- 13: erstes Überdruck-Sicherheitsventil
- 14: zweites Überdruck-Sicherheitsventil
- 15: Durchflußmesser (z. B. Rotameter)
- 15a: Ventil (Absperr- und/oder Drosselventil
- 16: Einrichtung zur Temperaturmessung
- 16a: Temperaturmeßstelle
- 17: Anzeige- und Umschalteinrichtung
- 18a: erste Meßleitung
- 18b: zweite Meßleitung
- 19a: erste Steuerleitung
- 19b: zweite Steuerleitung
- 19c: dritte Steuerleitung
- 19d: Leitung für Signalverarbeitung
- 20: Vorratsbehälter und Kaltverdampfer
- 20a: erste Kupplung
- 20b: zweite Kupplung
- 20c: Innenbehälter
- 20d: Außenbehälter
- 20e: Isolierung
- 20f: Füllleitung
- 20g: Entnahmeleitung
- 20h: Verdampfer
- 20i: Flüssigentnahmeleitung
- 20j: Einrichtung zur Füllstandsanzeige
- 20k: Einrichtung zum Druckaufbau

- A: Antriebszylinder
- B: Bilderfassungseinrichtung
- D: Druckmittel (z.B. Druckluft oder Hydrauliköl)
- G: Formiergas
- K: Kühl- und Formiergaskammer, ringförmig
- LG: tiefkaltes verflüssigtes Gas (kryogene Flüssigkeit)
- LAr: Flüssig-Argon
- LN₂: Flüssig-Stickstoff
- R1: erste Rohrleitung
- R2: zweite Rohrleitung
- S: Schweißnaht
- Z: Wärmeeinflußzone
Figur 3
- 1': erstes Innenrohr
- 2': zweites Innenrohr
- 1": erstes Außenrohr
- 2": zweites Außenrohr
- 1 a: erste Endenausführung
- 2a: zweite Endenausführung
- W: Wurzelbereich
- ϑ: Temperatur in der Wärmeeinflußzone Z
- ϑₐ ; ϑₐ*: Temperatur an der Außenwand des Rohrleitungsendes
- ϑᵢ ; ϑᵢ*: Temperatur an der Innenwand des Rohrleitungsendes
- ϑ_{go}: obere Grenztemperatur
- ϑ_{gu}: untere Grenztemperatur

### DETAILLIERTE BESCHREIBUNG

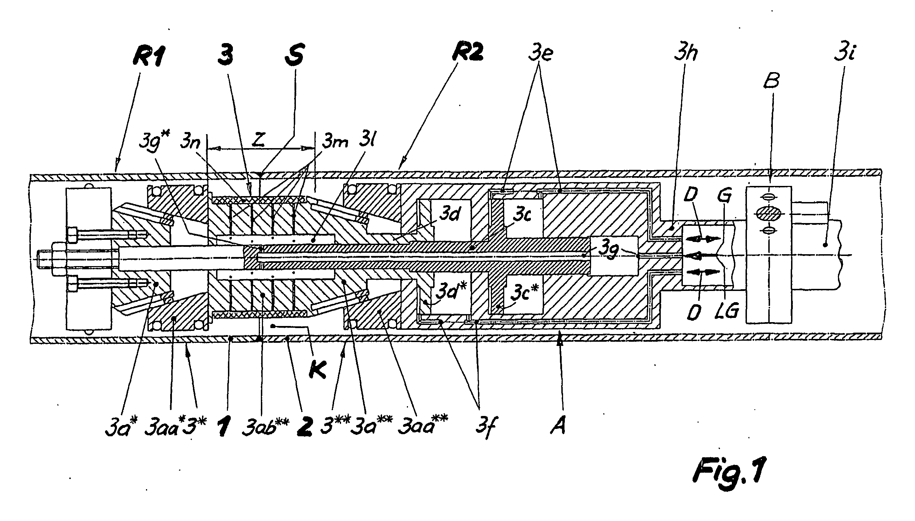

Über eine Schweißnaht S **(Figur 1)** miteinander zu verbindende Rohrleitungsenden 1, 2 zweier Rohrleitungen R1, R2 werden an der Innenseite der Rohrleitungsenden mit Hilfe einer sogenannten Innenspannvorrichtung 3 gegenseitig konzentrisch ausgerichtet und gespannt. Dabei richtet sich die Achse der Innenspannvorrichtung 3 konzentrisch zur Achse der Rohrleitungsenden 1, 2 aus. Die Innenspannvorrichtung 3 besteht unter anderem aus einem ersten Spannerkopf 3* und einem zweiten Spannerkopf 3**. Ersterer besteht aus einem keilförmigen ersten Innenteil 3a*, welches durch axiale Verschiebung in einem ersten Außenteil 3aa* letzteres in radialer Richtung aufweitet. Der erste Außenteil 3aa* ist aus mehreren, über den Umfang verteilten Segmenten aufgebaut, die über zwei nicht näher bezeichnete, die Segmente umschließende sogenannte Wurmfedern in radialer Richtung vorgespannt sind. Der zweite Spannerkopf 3** ist entsprechend aufgebaut und weist einen zweiten Innenteil 3a** und einen zweiten Außenteil 3aa** auf. Das Innenteil 3a** setzt sich in einer im wesentlichen zylindrische Verlängerung 3ab** fort, auf der sich andererseits und endseitig der erste Außenteil 3aa* axial abstützt.

Der erste Spannerkopf 3* ist mit einer am ersten Innenteil 3a* angreifenden und von einem ersten Antriebskolben 3c* angetriebenen ersten Antriebsstange 3c verbunden. In gleicher Weise wird der zweite Innenteil 3a** des zweiten Spannerkopfes 3** über eine von einem zweiten Antriebskolben 3d* angetriebene zweite Antriebsstange 3d in axialer Richtung verschoben. Der erste und der zweite Antriebskolben 3c* bzw. 3d* sind in einem Antriebszylinder A angeordnet und können jeweils beidseitig mit einem über Druckmittelbohrungen 3e, 3f zugeführten Druckmittel D, beispielsweise Druckluft, unter bestimmten Bedingungen (z.B. bei Reduzierung des Wärmeeinfalls durch die erfindungsgemäße Kühlung) auch mit einem inkompressiblen Druckmittel wie beispielsweise Hydrauliköl, beaufschlagt werden. Somit sind die beiden Spannerköpfe 3*, 3**, jeweils getrennt voneinander, ansteuerbar, so daß das dem jeweiligen Spannerkopf 3*, 3** zugeordnete Rohrleitungsende 1 bzw. 2, getrennt und unabhängig vom jeweils anderen, gespannt und konzentrisch zur Innenspannvorrichtung 3 ausgerichtet werden kann.

Die vorstehend beschriebene Innenspannvorrichtung 3 erlaubt zunächst ein Spannen und Ausrichten des in Bezug auf die Schweißnaht S linksseitig dargestellten Rohrleitungsendes 1. Danach kann das rechtsseitig dargestellte Rohrleitungsende 2 gespannt werden, wobei das linksseitige an das rechtsseitige zur Bildung der anschließend herzustellenden Schweißnaht S spaltfrei herangezogen wird. In der ersten Antriebsstange 3c ist eine Formiergasbohrung 3g angeordnet, die im Bereich zwischen den Spannerköpfen 3*, 3** in eine dort von den beiden Rohrleitungsenden 1 und 2 gebildete ringförmige Kühl- und Formiergaskammer K auf dem Weg über eine Querbohrung 3g*, eine Verteilungskammer 3l und eine Vielzahl von Verteilungsbohrungen 3m ausmündet. Eine besonders wirksame Verteilung des Gases über den gesamten Umfang und die gesamte Länge (Wärmeeinflußzone Z) der Kühl- und Formiergaskammer K stellt eine feinporig strukturierte Verteilungshülse 3n sicher, die die Verlängerung 3ab** im Bereich der austretenden Verteilungsbohrungen 3m umschließt. Über die Formiergasbohrung 3g und den vorstehend erwähnten weiteren Strömungsweg kann kühlendes Formiergas G, ggf. als tiefkaltes verflüssigtes Gas LG, der Schweißnaht S während des Schweißvorganges zugeführt werden.

Das Antriebsgehäuse A ist auf seiner den Spannerköpfen 3*, 3** abgewandten Stirnseite mit einem Schaft 3h verbunden, über den die Druckmittelbohrungen 3e und 3f sowie die Formiergasbohrung 3g in die Innenspannvorrichtung 3 eingefüht werden. Der Schaft 3h trägt darüber hinaus außenseits eine in ihren Einzelteilen nachfolgend nicht näher bezeichnete Bilderfassungseinrichtung B, mit der die fertiggestellte Schweißnaht S nach axialer Verschiebung der Innenspannvorrichtung 3 visuell beurteilt werden kann. Der Schaft 3h setzt sich jenseits der Bilderfassungseinrichtung B in einem Versorgungsrohr 3i fort.

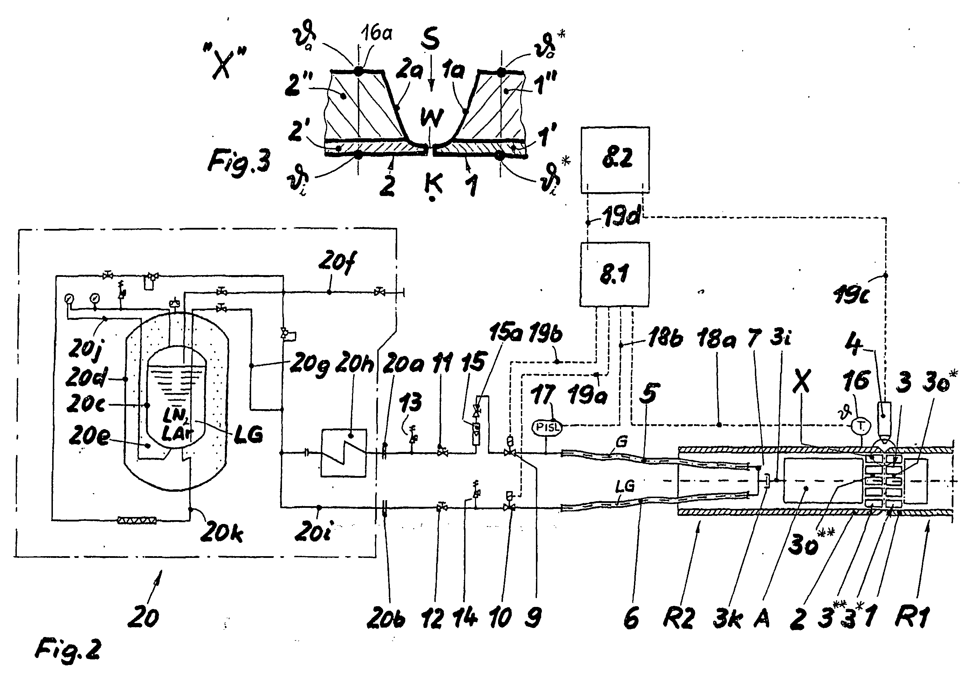

Das erste und das zweite Rohrleitungsende 1, 2 der ersten und der zweiten Rohrleitung R1, R2 **(Figur 2)** sind über die Innenspannvorrichtung 3, die, in Richtung der Rohrachse gesehen, aus den beiden Spannerköpfen 3*, 3** mit zwei im axialen Abstand voneinander angeordneten Reihen von im einzelnen nicht näher bezeichneten Spannbacken und dem Antriebszylinder A besteht, derart gespannt und koaxial zueinander ausgerichtet, daß im Bereich der zu erzeugenden Schweißnaht S die in **Figur 3** beispielhaft dargestellte Anordnung einer Endenausführung 1 a, 2a der Rohrleitungsenden 1, 2 gegeben ist. In der gezeigten Darstellung ist davon auszugehen, daß an die erste Rohrleitung R1, von der lediglich das erste Rohrende 1 dargestellt ist, die zweite Rohrleitung R2 in Form eines Rohrstückes einer bestimmten Länge angeschweißt wird und daß über diese zweite Rohrleitung R2 die Innenspannvorrichtung 3 an die miteinander zu verbindenden Rohrleitungsenden 1, 2 von innen herangeführt wird.

Der Antriebszylinder A endet in dem Versorgungsrohr 3i, durch das Leitungseinrichtungen zur Energie- und Gaszufuhr hindurchgeführt sind, wobei über eine Kupplungsvorrichtung 3k ein Sammlerteil 7, über das das tiefkalte verflüssigte Gas LG oder dessen dampf- bzw. gasförmige Phase G herangeführt wird, mit dem Versorgungsrohr 3i verbunden ist. Das Sammlerteil 7 vereinigt eine Gasleitung 5 und eine Leitung für Flüssiggas 6. Die Gasleitung 5 der erfindungsgemäßen Anordnung nimmt ihren Ausgang an einer ersten Kupplung 20a am Austritt eines Verdampfers 20h eines Vorratsbehälters und Kaltverdampfers 20 für die kryogene Flüssigkeit LG, und sie führt, in der Reihenfolge der nachfolgenden Nennung, über ein erstes Überdruck-Sicherheitsventil 13, ein erstes Handabsperrventil 11, einen Durchflußmesser 15 in Verbindung mit einem nachgeschalteten Absperrund/oder Drosselventil 15a sowie ein erstes ferngesteuertes Absperrventil 9. Die Leitung für Flüssiggas 6 ist über eine zweite Kupplung 20b an einer Flüssigentnahmeleitung 20i des vorgenannten Vorratsbehälters und Kaltverdampfers, 20 für kryogene Flüssigkeit LG angeschlossen, und sie führt, in der nachfolgenden Reihenfolge, über ein zweites Handabsperrventil 12, ein zweites Überdruck-Sicherheitsventil 14 sowie ein zweites ferngesteuertes Absperrventil 10.

Der Aufbau des Vorratsbehälters und Kaltverdampfers 20 für kryogene Flüssigkeit LG besteht in an sich bekannter Weise aus einem Innenbehälter 20c zur Bevorratung der kryogenen Flüssigkeit LG, beispielsweise Flüssigstickstoff (LN₂) oder Flüssigargon (LAr), einem Außenbehälter 20d und einer Isolierung 20e, die den Raum zwischen Innen- und Außenbehälter 20c, 20d ausfüllt. Der innenbehälter 20c kann über eine Fülleitung 20f mit der kryogenen Flüssigkeit LN₂ oder LAr befüllt werden. Letztere wird über eine Entnahmeleitung 20g entnommen. Darüber hinaus ist der Vorratsbehälter und Kaltverdampfer 20 mit einer Einrichtung zur Füllstandsanzeige 20j und einer Einrichtung zum Druckaufbau 20k versehen. Die dem Innenbehälter 20c entnommene kryogene Flüssigkeit LG gelangt, ausgehend von der Entnahmeleitung 20g, wahlweise entweder über den Verdampfer 20h oder die Flüssigentnahmeleitung 20i in die erfindungsgemäße Anordnung. Bei einer Entnahme über den Verdampfer 20h strömt das tiefkalte Gas entweder als Sattdampf oder, bei hinreichender Wärmezufuhr, als kaltes Gas G über die Gasleitung 5, den Sammlerteil 7 und das Versorgungsrohr 3i in die Kühl- und Formiergaskammer K **(Figur 1)** zwischen die beiden Spannerköpfe 3*, 3** im Bereich der Wärmeeinflußzone Z (s. Figur 1) der miteinander zu verbindenden Rohrleitungsenden 1, 2. Eine Abströmung aus diesem Bereich in die benachbarten Innenräume der Rohrleitungen R1, R2 ist über erste und zweite Abströmöffnungen 3o* bzw. 3o** innerhalb der zugeordneten Spannerköpfe 3*, 3** sichergestellt.

Der erfindungsgemäßen Anordnung ist eine erste Steuereinheit 8.1 zugeordnet, die die Zufuhr des tiefkalten verflüssigten Gases LG bzw. des tiefkalten Gases in die Kühl- und Formiergaskammer K steuert. Die Steuereinheit 8.1 ist mit dem ersten und dem zweiten ferngesteuerten Absperrventil 9, 10 jeweils über eine er ste bzw. zweite Steuerleitung 19a, 19b verbunden. Des weiteren ist sie über eine erste Meßleitung 18a mit einer Einrichtung zur Temperaturmessung 16 sowie über eine zweite Meßleitung 18b mit einer Anzeige- und Umschalteinrichtung 17 (PISL: Druck-Anzeige und Umschaltung bei Unterschreitung eines unteren Druckgrenzwertes) verbunden, die in der Gasleitung 5 angeordnet ist und bei Unterschreiten eines vorgegebenen Druckes oder eines vorgegebenen, direkt gemessenen Durchflusses die Kühlung auf Flüssiggasentnahme und damit die Zufuhr des Kühlmittels auf die Leitung für Flüssiggas 6 umschaltet. Die Überwachung des Vordruckes an einer bestimmten Stelle in der Gasleitung 5 gibt, da die Druckverlustbeiwerte in der nachgeordneten Leitungsanordnung feststehen, eine hinreichend sichere Information über den tatsächlichen Durchfluß in dieser Gasleitung 5. Des weiteren ist eine zweite Steuereinheit 8.2 vorgesehen, die zum einen über eine dritte Steuerleitung 19c mit einem Schweißwerkzeug 4 und zum andem über eine Leitung für Signalverarbeitung 19d mit der ersten Steuereinheit 8.1 verbunden ist. Zur Verringerung des Wärmeeinfalls außerhalb der Innenspannvorrichtung,3 sind die in Frage kommenden Leitungsabschnitte mit einer hochwirksamen thermischen Isolierung versehen.

In **Figur 3** sind die Rohrenden 1, 2 eines aus einem ersten und einem zweiten Innenrohr 1' bzw. 2' und einem ersten und einem zweiten Außenrohr 1" bzw. 2" bestehenden plattierten Rohres oder eines sogenannten BUBI-Rohres dargestellt. Die Verbindung der Innenrohre 1' und 2' bildet innenseits einen Wurzelbereich W der Rundschweißnaht S aus, wobei sich die Verbindung insgesamt aufgrund der Endenausführung 1 a, 2a der miteinander zu verbindenden Rohrleitungsenden 1, 2 nur durch mehrlagiges Schweißen herstellen läßt. Im schweißnahtnahen Bereich der Schweißnaht S wird eine nicht näher bezeichnete und dargestellte Temperaturmeßstelle 16a positioniert. Dies kann, wie dies Figur 3 verdeutlicht, wahlweise entweder auf der Seite des ersten Rohrendes 1 (Temperaturwerte ϑₐ*, ϑᵢ*) oder auf der Seite des zweiten Rohrendes 2 (Temperaturwerte ϑₐ, ϑᵢ) erfolgen. Des weiteren kann die Temperaturmeßstelle 16a an der Außenseite des Außenrohres 1", 2" (Temperaturwerte ϑₐ, ϑₐ*) oder an der Innenseite des Innenrohres 1', 2' (Temperaturwerte ϑᵢ, ϑᵢ*) vorgesehen werden.

### Verfahrensvariante I

In der ersten Steuereinheit 8.1 sind eine obere Grenztemperatur ϑ_{go} und eine untere Grenztemperatur ϑ_{gu} des zulässigen Temperaturbereichs hinterlegt (beispielsweise ϑ_{go} = 100 °C; ϑ_{gu}. = 40 °C) Beim Schweißen der Rohrleitungsenden 1, 2 ist dafür Sorge zu tragen, daß diese Grenztemperaturen ϑ_{go} und ϑ_{gu} nicht überbzw. unterschritten werden. Hierzu wird dem Vorratsbehälter und Kaltverdampfer 20 tiefkaltes verflüssigtes Gas LG (beispielsweise LN₂ oder LAr) entnommen und auf dem Weg über den Verdampfer 20h verdampft. Der dabei entstehende Sattdampf oder, wenn mehr Wärme zugeführt wird, als zur Verdampfung notwendig ist, über die Sattdampftemperatur erwärmtes kaltes Gas G strömt über die Gasleitung 5 in die Kühl- und Formiergaskammer K, um dort die miteinander zu verbindenden Innenrohre 1', 2' (bzw. Rohrleitungsenden 1, 2 bei Rohrleitungen R1, R2 mit homogenem Wandaufbau) zu kühlen und anschließend über die Abströmöffnungen 3o*, 3o** in den beiden Reihen der Spannbacken der Spannerköpfe 3*, 3** in die benachbarten Rohrinnenräume abzuströmen. Für den Fall einer zu starken Kühlung (Unterschreiten der Grenztemperatur ϑ_{gu}) wird die erste Steuereinheit 8.1 das erste ferngesteuerte Absperrventil 9 schließen, so daß dadurch die Temperatur im in Frage kommenden schweißnahtnahen Bereich des Rohrwerkstoffes ansteigt. Im andern Falle, bei einem Anstieg der Temperatur ϑ auf die Grenztemperatur ϑ_{go} oder darüber hinaus, wird das erste ferngesteuerte Absperrventil 9 geöffnet. Da die Durchflußleistung der Gasleitung 5 und der dieser bis zum Vorratsbehälter und Kaltverdampfer 20 vorgeordneten Einrichtung bekannt ist, kann über die Anzeige- und Umschalteinrichtung 17 in Verbindung mit der über die Einrichtung zur Temperaturmessung 16 an der Temperaturmeßstelle 16a werden, ob die Kühlleistung durch Gaszufuhr G im vorliegenden Anwendungsfalle ausreicht. Ist dies nicht der Fall, dann schaltet die erste Steuereinheit 8.1 auf die nachfolgend beschriebene Verfahrensvariante II um.

### Verfahrensvariante II

Stellt sich im Zuge der Durchführung der Verfahrensvariante I heraus, daß eine höhere Kühlleistung erforderlich oder von Anfang an eine höhere Kühlleistung notwendig ist, dann wird dem Vorratsbehälter und Kaltverdampfer 20 tiefkaltes verflüssigtes Gas LG über die Entnahmeleitung 20g entnommen und der Flüssigentnahmeleitung 20i direkt zugeführt. Das tiefkalte verflüssigte Gas LG gelangt über die Leitung für Flüssiggas 6 und den Sammlerteil 7 auf dem Weg über das Versorgungsrohr 3i in die vorstehend beschriebene Kühl- und Formiergaskammer K. Bei entsprechender Bemessung der Durchflußleistung wird der auf dem Weg in die Kühl- und Formiergaskammer K unabdingbare Wärmeeinfall in das tiefkalte verflüssigte Gas LG dazu führen, daß dieses verdampft, so daß die Innenrohre 1' und 2' (bzw. Rohrleitungsenden 1, 2 bei Rohrleitungen R1, R2 mit homogenem Wandaufbau) im Wurzelbereich W der Schweißnaht S von Dampf bzw. Gas G und nicht von der wesentlich intensiver kühlenden kryogenen Flüssigkeit LG beaufschlagt werden. Abhängig von der über die Einrichtung zur Temperaturmessung 16 gemessenen Temperatur ϑ und ihrer jeweiligen Relation zu den Grenztemperaturen ϑ_{go} und ϑ_{gu} wird die Zufuhr von Flüssiggas LG über das zweite ferngesteuerte Absperrventil 10 gesteuert.

Bei beiden Verfahrensvarianten ist sichergestellt, daß beim Ausbleiben des Formiergases G und damit auch der Kühlung die der Steuerung des Schweißwerkzeuges 4 dienende zweite Steuereinheit 8.2 von der ersten Steuereinheit 8.1 die entsprechende Information erhält und den zur Schweißung notwendigen Schweißstrom abschaltet.

## Patentansprüche

1. Verfahren zur Begrenzung der Temperatur beim Schweißen der Enden eines Rohrpaares im schweißnahtnahen Bereich des Rohrwerkstoffes, bei dem die miteinander zu verbindenden Rohrleitungsenden (1, 2) zweier Rohrleitungen (R1, R2) durch eine jeweils an der Innenseite der Rohrleitungsenden angreifende Innenspannvorrichtung (3) gegenseitig konzentrisch ausgerichtet und gespannt sind und sich die Achse der Innenspannvorrichtung konzentrisch zur Achse der Rohrleitungsenden ausrichtet, bei dem die innnenspannvorrichtung (3) zusammen mit den Rohrleitungsenden (1, 2) eine ringförmige Formiergaskammer (K) zur Beaufschlagung der Schweißnaht (S) mit einem Formiergas (G) bildet und begrenzt, bei dem der schweißnahtnahe Bereich des Rohrwerkstoffes im Bereich einer vom Schweißen bestimmten Wärmeeinflußzone (Z) mit dem Formiergas (G) beaufschlagt und damit gleichzeitig gekühlt wird, bei dem sich im Rohrwerkstoff der Wärmeeinflußzone (Z) eine Temperatur (ϑ) innerhalb eines durch eine obere und eine untere Grenztemperatur (ϑ_{go} ; ϑ_{gu}) vorgegebenen Temperaturbereichs einstellt, bei dem das Formiergas (G) als kryogene Flüssigkeit (LG) bereitgestellt wird und bei dem ein auf der Außenseite der Rohrleitungen positioniertes Schweißwerkzeug (4) und die Rohrleitungen (R1, R2) eine auf die Achse der Rohrleitungen bezogene Rotationsbewegung relativ zueinander ausführen, **dadurch gekennzeichnet,**
• **daß** die Beaufschlagung mit Formiergas in gasförmigem Zustand und
• **daß** die Kühlung der Wärmeeinflußzone (Z) in Abhängigkeit von der Temperatur (ϑ) geregelt erfolgen.

2. Verfahren nach Anspruch 1, **dadurch gekennzeichnet, daß** die Kühlung der Wärmeeinflußzone (Z) mit dem Sattdampf (G) der kryogenen Flüssigkeit (LG) erfolgt.

3. Verfahren nach Anspruch 1 oder 2, **dadurch gekennzeichnet, daß** bei der Kühlung der Wärmeeinflußzone (Z) die Verdampfungsenthalpie der kryogenen Flüssigkeit (LG) teilweise bis vollständig ausgenutzt wird (Verdampfungskühlung).

4. Anordnung zur Durchführung des Verfahrens nach einem der Ansprüche 1 bis 3, mit einer Innenspannvorrichtung (3), die die miteinander zu verbindenden Rohrleitungsenden (1, 2) zweier Rohrleitungen (R1, R2) jeweils an der Innenseite der Rohrleitungsenden gegenseitig konzentrisch ausrichtet und spannt und die sich konzentrisch zur Achse der Rohrleitungsenden ausrichtet, mit einer zwischen einem ersten und einem zweiten Spannerkopf (3*, 3**) der Innenspannvorrichtung (3) gebildeten ringförmigen Formiergaskammer (K), in die einerseits Verteilungsbohrungen (3m) für Formiergas (G) ausmünden und die andererseits jeweils im Bereich zwischen der Innenspannvorrichtung (3) und der zugeordneten Rohrleitung (R1, R2) Abströmöffnungen (3o*, 3o**) aufweist, wobei die Formiergaskammer (K) der Bereitstellung der notwendigen Kühlleistung dient, außenseits von einer vom Schweißen bestimmten, beiderseits einer Schweißnaht (S) in den Rohrleitungsenden (1, 2) sich ausbreitenden Wärmeeinflußzone (Z) begrenzt wird, innenseits von einer zylindrischen Verlängerung (3ab**) begrenzt wird, die einerseits an einem den zweiten Spannerkopf (3**) spreizenden zweiten Innenteil (3a**) angeordnet ist und andererseits bis zum ersten Spannerkopf (3*) heranreicht und diesen axial abstützt, und die Formiergaskammer (K) sich jeweils beiderseits der Schweißnaht (S) in Richtung der Achse der Rohrleitung (R1, R2) über das zum jeweiligen Spannen der Rohrleitungsenden (1, 2) notwendige Abstandsmaß hinaus erstreckt, und mit einem auf der Außenseite der Rohrleitung positionierten Schweißwerkzeug (4), wobei letzteres und die Rohrleitungen (R1, R2) eine auf die Achse der Rohrleitungen bezogene Rotationsbewegung relativ zueinander ausführen, **dadurch gekennzeichnet,**
• **daß** im Bereich der Wärmeeinflußzone (Z) eine die Temperatur (ϑ) der Außen- oder Innenwand des Rohrleitungsendes (1, 2) erfassende Temperaturmeßstelle (16a) vorgesehen ist, und
• **daß** Steuereinheiten (8.1, 8.2) über Messleitungen (18a, 18b) mit einer Einrichtung zur Temperaturmessung (16) an der Temperaturmessstelle (16a) und über Steuerteitungen (19a, 19b) mit Abspenventiten (9, 10) eines Vorratsbehäters und Kaltverdampfers (20) verbunden sind.

5. Anordnung nach Anspruch 4, **dadurch gekennzeichnet, daß** die Kühl- und Formiergaskammer (K) innenseits von einer Verlängerung (3ab**) begrenzt ist, die eine in Richtung der Achse der Rohrleitung (R1, R2) orientierte, die Achse umschließende Verteilungskammer (3l) aufweist, von der Verteilungsbohrungen (3m) ausgehen, die sternförmig über den gesamten Umfang der Kühl- und Formiergaskammer (K) verteilt angeordnet sind und in letztere ausmünden.

6. Anordnung nach Anspruch 4 oder 5, **dadurch gekennzeichnet, daß** Verlängerung (3ab**) im Bereich der austretenden Verteilungsbohrungen (3m) von einer feinporig strukturierten Verteilungshülse (3n) umschlossen ist.

7. Anordnung nach einem der Ansprüche 4 bis 6, **dadurch gekennzeichnet, daß** das Formiergas (G) der Verteilungskammer (3l) über eine Formiergasbohrung (3g), die in einer einen Antriebszylinder (A) der Innenspannvorrichtung (3) und die Verteilungskammer (3l) durchdringenden ersten Antriebsstange (3c) angeordnet ist, zugeführt wird.

8. Anordnung nach einem der Ansprüche 4 bis 7, **dadurch gekennzeichnet, daß** die Temperaturmeßstelle (16a) berührungsfrei arbeitend realisiert ist.

9. Anordnung nach einem der Ansprüche 4 bis 8, **dadurch gekennzeichnet, daß** ein erster und ein zweiter Antriebskolben (3c*, 3d*) im Antriebszylinder (A) jeweils mit einer mit hydraulischem Druckmittel (D) beaufschlagbaren Profildichtung ausgestattet ist.

10. Anordnung nach einem der Ansprüche 4 bis 9, **dadurch gekennzeichnet, daß** der in Form von Spannbacken ausgebildete jeweilige Außenteil (3aa*, 3aa**) des Spannerkopfes (3*, 3**) im Bereich seiner Kontaktflächen mit dem zugeordneten Rohrleitungsende (1, 2) und im Bereich seiner Laufftächen mit dem zugeordneten Innenteil (3a*, 3a**) eine Chrom-Polytetraflouräthylen-Beschichtung (Chrom-Teflon-Beschichtung) aufweist.

11. Anordnung nach einem der Ansprüche 4 bis 10, **dadurch gekennzeichnet, daß** die Formiergasbohrung (3g) wahlweise mit einer Gasleitung (5) oder mit einer Leitung für Flüssiggas (6) verbunden ist, die beide in einem Vorratsbehätter und Kaltverdampfer (20) für kryogene Flüssigkeit (LG) enden.

12. Anordnung nach einem der Ansprüche 4 bis 11, **dadurch gekennzeichnet, daß** die Verbindung zwischen dem Vorratsbehälter und Kaltverdampfer (20) und der Gasleitung (5) oder der Leitung für Flüssiggas (6), abhängig von der Temperatur (3) an der Temperaturmeßstelle (16a), über eine Einrichtung zur Temperaturmessung (16) gesteuert wird.

## Claims

1. Method of limiting the temperature when welding the ends of a pair of pipes in the region of the pipe material close to the weld seam, wherein the pipeline ends (1, 2) of two pipelines (R1, R2) to be interconnected are orientated in a reciprocally concentric manner and tensioned by an internal tensioning device (3), which engages respectively with the internal side of the pipeline ends, and the axis of the internal tensioning device is orientated concentrically relative to the axis of the pipeline ends, wherein the internal tensioning device (3), together with the pipeline ends (1, 2), forms and defines an annular forming gas chamber (K) for a forming gas (G) to act on the weld seam (S), wherein the region of the pipe material close to the weld seam is acted-upon, and hence simultaneously cooled, by the forming gas (G) in the region of a heat influencing zone (Z), which is determined by the welding process, wherein, in the pipe material of the heat influencing zone (Z), a temperature (ϑ) is set within a temperature range prescribed by an upper and a lower temperature limit (ϑ_{go}; ϑ_{gu}), wherein the forming gas (G) is made available as a cryogenic liquid (LG), and wherein a welding tool (4), positioned on the external side of the pipelines, and the pipelines (R1, R2) execute a rotational movement relative to each other, with respect to the axis of the pipelines, **characterised**
• **in that** forming gas is introduced in the gaseous state; and
• **in that** the cooling of the heat influencing zone (Z) is effected in a regulated manner in dependence on the temperature (ϑ).

2. Method according to claim 1, **characterised in that** the cooling of the heat influencing zone (Z) is effected with the saturated vapour (G) of the cryogenic liquid (LG).

3. Method according to claim 1 or 2, **characterised in that**, during the cooling of the heat influencing zone (Z), the evaporation enthalpy of the cryogenic liquid (LG) is partially to completely utilised (evaporation cooling).

4. Arrangement for carrying out the method according to one of claims 1 to 3, having an internal tensioning device (3), which orientates in a reciprocally concentric manner and tensions the pipeline ends (1, 2) of two pipelines (R1, R2) to be interconnected, respectively on the internal side of the pipeline ends, and said device is orientated concentrically relative to the axis of the pipeline ends, said arrangement having an annular forming gas chamber (K), which is formed between a first and a second tensioning head (3*, 3**) of the internal tensioning device (3), and into which chamber, at one end, extend distribution bores (3m) for forming gas (G), and which chamber has, at the other end, respectively in the region between the internal tensioning device (3) and the associated pipeline (R1, R2), discharge apertures (3o*, 3o**), the forming gas chamber (K) serving to make available the necessary cooling power, being defined externally by a heat influencing zone (Z), which is determined by the welding process and widens on both sides of a weld seam (S) in the pipeline ends (1, 2), and being defined internally by a cylindrical extension (3ab**) which, on the one hand, is disposed on a second internal part (3a**), which splays the second tensioning head (3**), and, on the other hand, extends as far as the first tensioning head (3*) and supports said head axially, and the forming gas chamber (K) extending respectively on both sides of the weld seam (S) in the direction of the axis of the pipeline (R1, R2) beyond the spacing dimension necessary for the respective tensioning of the pipeline ends (1, 2), and said arrangement having a welding tool (4) positioned on the external side of the pipeline, said welding tool and the pipe lines (R1, R2) executing a rotational movement relative to each other, with respect to the axis of the pipelines, **characterised**
• **in that**, in the region of the heat influencing zone (Z), a temperature measuring location (16a) is provided, which detects the temperature (ϑ) of the external or internal wall of the pipeline end (1, 2); and
• **in that** control units (8.1, 8.2) are connected, via measuring lines (18a, 18b), to a means for measuring temperature (16) at the temperature measuring location (16a) and, via control lines (19a, 19b), to shut-off valves (9, 10) of a supply container and cold evaporator (20).

5. Arrangement according to claim 4, **characterised in that** the cooling and forming gas chamber (K) is defined internally by an extension (3ab**), which has a distribution chamber (31) which is orientated in the direction of the axis of the pipeline (R1, R2) and surrounds the axis, from which chamber distribution bores (3m) emerge, which are distributed in a star-like manner over the entire periphery of the cooling and forming gas chamber (K) and extend into said chamber.

6. Arrangement according to claim 4 or 5, **characterised in that** the extension (3ab**), in the region of the outgoing distribution bores (3m), is surrounded by a finely pored distribution sleeve (3n).

7. Arrangement according to one of claims 4 to 6, **characterised in that** the forming gas (G) is supplied to the distribution chamber (31) via a forming gas bore (3g), which is disposed in a first driving rod (3c) which penetrates a driving cylinder (A) of the internal tensioning device (3) and the distribution chamber (31).

8. Arrangement according to one of claims 4 to 7, **characterised in that** the temperature measuring location (16a) is configured so as to operate in a contact-free manner.

9. Arrangement according to one of claims 4 to 8, **characterised in that** a first and a second driving piston (3c*, 3d*) in the driving cylinder (A) are each provided with a profile seal, which can be acted-upon with hydraulic pressure medium (D).

10. Arrangement according to one of claims 4 to 9, **characterised in that** the respective external part (3aa*, 3aa**) of the tensioning head (3*, 3**), configured in the form of clamping jaws, has a chromium polytetrafluoroethylene coating (chromium Teflon coating) in the region of its contact faces with the associated pipeline end (1, 2) and in the region of its bearing faces with the associated internal part (3a*, 3a**).

11. Arrangement according to one of claims 4 to 10, **characterised in that** the forming gas bore (3g) is selectively connected to a gas line (5) or to a line for liquid gas (6), which both terminate in a supply container and cold evaporator (20) for cryogenic liquid (LG).

12. Arrangement according to one of claims 4 to 11, **characterised in that** the connection between the supply container and cold evaporator (20) and the gas line (5) or the line for liquid gas (6) is controlled via a means for measuring temperature (16), in dependence on the temperature (ϑ) at the temperature measuring location (16a).

## Revendications

1. Procédé de limitation de la température lors du soudage des extrémités de deux tuyaux dans la zone proche de la soudure du matériau des tuyaux, dans lequel les extrémités de tuyau à assembler (1.2) de deux tuyaux (R1, R2) sont alignées de manière concentrique entre elles et serrées par un dispositif de serrage intérieur (3) respectif venant en prise avec la face intérieure des extrémités de tuyau et l'axe du dispositif de serrage intérieur est aligné de manière concentrique à l'axe des extrémités de tuyau, dans lequel le dispositif de serrage intérieur (3) forme et délimite, ensemble avec les extrémités de tuyau (1, 2), une chambre annulaire à mélange hydrogène-azote (K) pour la soumission du cordon de soudure (S) à un mélange hydrogène-azote (G), dans lequel la zone proche de la soudure du matériau des tuyaux est soumise, à l'endroit d'une zone d'influence de la chaleur déterminée par la soudure, à l'admission du mélange hydrogène-azote (G) et, de ce fait, simultanément refroidie, dans lequel s'établit, dans le matériau de tuyau de la zone d'influence de la chaleur (Z), une température (ϑ) dans une plage de températures prédéterminée par une température limite supérieure et inférieure (ϑ_{go} ; ϑ_{gu}), dans lequel le mélange hydrogène-azote (G) est mis à disposition sous forme de liquide cryogénique (LG) et dans lequel un outil de soudure (4) positionné sur la face extérieure des tuyaux et les tuyaux (R1, R2) effectuent un mouvement de rotation l'un par rapport à l'autre par rapport à l'axe des tuyaux, **caractérisé par le fait**
• **que** la soumission à l'admission du mélange hydrogène-azote à l'état gazeux et
• **que** le refroidissement de la zone d'influence de la chaleur (Z) s'effectuent de manière réglée en fonction de la température (ϑ).

2. Procédé selon la revendication 1, **caractérisé par le fait que** le refroidissement de la zone d'influence de la chaleur (Z) a lieu à l'aide de la vapeur saturée (G) du liquide cryogénique (LG).

3. Procédé selon la revendication 1 ou 2, **caractérisé par le fait que** lors du refroidissement de la zone d'influence de la chaleur (Z) est utilisée, en partie ou en tout, l'enthalpie d'évaporation du liquide cryogénique (LG) (refroidissement par évaporation).

4. Dispositif pour la mise en oeuvre du procédé selon l'une des revendications 1 à 3, avec un dispositif de serrage intérieur (3) qui aligne de manière concentrique entre elles et serre les extrémités de tuyau (1, 2) à assembler de deux tuyaux (R1, R2) sur chaque face intérieure des extrémités de tuyau et qui s'aligne de manière concentrique à l'axe des extrémités de tuyau, avec une chambre annulaire à mélange hydrogène-azote (K) formée entre une première et une deuxième tête de dispositif de serrage (3*, 3**) du dispositif de serrage intérieur (3) dans laquelle, d'une part, aboutissent des alésages de distribution (3m) du mélange hydrogène-azote (G) et, d'autre part, présentant chaque fois dans la zone entre le dispositif de serrage intérieur (3) et le tuyau associé (R1, R2) des ouvertures de sortie (3o*, 3o**), la chambre de mélange hydrogène-azote (K) servant à la mise à disposition de la puissance de refroidissement nécessaire et étant délimitée, du côté extérieur, par une zone d'influence de la chaleur (Z) déterminée par la soudure et s'étendant de part et d'autre d'un cordon de soudure (S) dans les extrémités de tuyau (1.2), à l'intérieur par un prolongement cylindrique (13ab**) qui, d'une part, est disposé sur un deuxième élément intérieur (3a**) écartant la deuxième tête de dispositif de serrage (3**) et, d'autre part, arrive jusqu'à la première tête de dispositif de serrage (3*) et supporte cette dernière axialement, et la chambre à mélange hydrogène-azote (K) s'étendant de part et d'autre du cordon de soudure (S) dans le sens de l'axe de tuyau (R1 R2) au-delà de la distance nécessaire pour le serrage de chaque extrémité de tuyau (1, 2), et avec un outil de soudure (4) positionné sur la face extérieure du tuyau, ce dernier et les tuyaux (R1, R2) effectuant un mouvement de rotation l'un par rapport à l'autre par rapport à l'axe des tuyaux, **caractérisé par le fait que**
• à l'endroit de la zone d'influence de la chaleur (Z) est prévu un point de mesure de température (16a) détectant la température (ϑ) de la paroi extérieure ou intérieure de l'extrémité de tuyau ( 1, 2), et
• des unités de commande (8.1, 8.2) sont reliées, par l'intermédiaire de lignes de mesure (18a, 18b), à un dispositif de mesure de température (16) au point de mesure de température (16a) et par l'intermédiaire de lignes de commande (19a, 19b) à des soupapes d'arrêt (9, 10) d'un réservoir et vaporisateur à froid (20).

5. Dispositif selon la revendication 4, **caractérisé par le fait que** la chambre à mélange hydrogène-azote et de refroidissement (K) est délimitée, intérieurement, par un prolongement (3ab**) qui présente une chambre de distribution (31) orientée dans le sens de l'axe du tuyau (R1, R2) et entourant l'axe, de laquelle partent des alésages de distribution (3m) qui sont disposés répartis en étoile sur toute la périphérie de la chambre de refroidissement et à mélange hydrogène-azote (K) et aboutissent dans cette dernière.

6. Dispositif selon la revendication 4 ou 5, **caractérisé par le fait que** le prolongement (3ab**) est entouré, à l'endroit des alésages de distribution sortants (3m), d'un manchon de distribution à structure à fins pores (3n).

7. Dispositif selon l'une des revendications 4 à 6, **caractérisé par le fait que** le mélange hydrogène-azote (G) de la chambre de distribution (31) est alimenté par l'intermédiaire d'un alésage à mélange hydrogène-azote (3g) qui est disposé dans une première tige d'entraînement (3c) pénétrant dans un cylindre d'entraînement (A) du dispositif de serrage intérieur (3) et dans la chambre de distribution (31).

8. Dispositif selon l'une des revendications 4 à 7, **caractérisé par le fait que** le point de mesure de température (16a) est réalisé de manière à fonctionner sans contact.

9. Dispositif selon l'une des revendications 4 à 8, **caractérisé par le fait qu'**un premier et un deuxième piston d'entraînement (3c*, 3d*) dans le cylindre d'entraînement (A) sont munis, chacun, d'un joint profilé pouvant être soumis à l'admission d'un moyen de pression hydraulique (D).

10. Dispositif selon l'une des revendications 4 à 9, **caractérisé par le fait que** la partie extérieure (3aa*, 3aa*) respective, réalisée sous forme de mâchoires de serrage, de la tête de dispositif de serrage (3*, 3**) présente, à l'endroit de ses faces de contact avec l'extrémité de tuyau associée (1, 2) et à l'endroit de ses surfaces d'appui avec l'élément intérieur associé (3a*, 3a**), un revêtement de chrome-polytétrafluoréthylène (revêtement de chrome-téflon).

11. Dispositif selon l'une des revendications 4 à 10, **caractérisé par le fait que** l'alésage à mélange hydrogène-azote (3g) est relié alternativement à une ligne de gaz (5) ou à une ligne de gaz liquide (6) qui aboutissent toutes deux dans un réservoir et vaporisateur à froid (20) de liquide cryogénique (LG).

12. Dispositif selon l'une des revendications 4 à 11, **caractérisé par le fait que** la connexion entre le réservoir et vaporisateur à froid (20) et la ligne de gaz (5) ou la ligne de gaz liquide (6) est commandée en fonction de la température (ϑ) au point de mesure de température (16a), par l'intermédiaire d'un dispositif de mesure de température (16).
